Europäisches Patentamt

European Patent Office

Office européen des brevets

(11) Veröffentlichungsnummer: **0 442 364 A2**

# (12) EUROPÄISCHE PATENTANMELDUNG

(21) Anmeldenummer: **91101603.8**

(22) Anmeldetag: **06.02.91**

(51) Int. Cl.⁵: **B29C 45/67**, B29C 45/17

(30) Priorität: **15.02.90 DD 337868**

(43) Veröffentlichungstag der Anmeldung:
**21.08.91 Patentblatt 91/34**

(84) Benannte Vertragsstaaten:
**AT DE FR GB IT**

(71) Anmelder: **PLASTMASCHINENWERK
SCHWERIN GmbH
Werkstrasse 2
O-2781 Schwerin-Sued(DE)**

(72) Erfinder: **Fueller, Klaus Dipl.-Ing.
Frunsestrasse 2
O-2792 Schwerin(DE)**
Erfinder: **Garberding, Manfred
Frunsestrasse 2
O-2792 Schwerin(DE)**

(74) Vertreter: **Füchsle, Klaus, Dipl.-Ing. et al
Hoffmann . Eitle & Partner Patentanwälte
Arabellastrasse 4
W-8000 München 81(DE)**

(54) **Spritzgiessmaschine zur Kunststoffverarbeitung.**

(57) Spritzgieszmaschine, Kunststoffverarbeitung, Werkzeugaufspannplatte fest, beweglich, Spritzeinheit, Eilgangzylinder, Drehpunkt, Gleitschuh schwenkbar, Laengsachse, geneigt, Kolbenstange, senkrechte Abstand

Die Erfindung betrifft eine Spritzgieszmaschine bestehend aus einer Spritzeinheit, einer festen und einer auf einer Fuehrungsbahn eines Grundrahmens auf Gleitschuhen durch langhubige hydraulische Eilgangzylinder beweglichen Werkzeugaufspannplatte. Die Werkzeugaufspannplatten sind ueber darin freitragend gelagerte Saeulen bei geschlossenem Formwerkzeug verriegelbar. Die Werkzeughoehe ist durch eine Werkzeughoehenverstellvorrichtung einstellbar. Ziel ist es, einen kostenguenstigen Eilgangantrieb zu entwickeln, der platzsparend angeordnet ist und den auftretenden Verschleisz reduziert. Die Loesung sieht vor die/den Eilgangzylinder zwischen der beweglichen Werkzeugaufspannplatte und der Spritzeinheit so anzuordnen, dasz die Laengsachse um einen spitzen Winkel gegenueber der horizontalen Fuehrungsbahn geneigt ist und am ausfahrseitigen Ende fuer die Kolbenstange um einen Drehpunkt schwenkbar im Grundrahmen gelagert ist. Das Ende der Kolbenstange ist in einem Drehpunkt gelenkig mit den Gleitschuhen verbunden, wobei der senkrechte Abstand vom Massenschwerpunkt der beweglichen Aufspannplatte zum Drehpunkt im Gleitschuh kleiner ist als der senkrechte Abstand zum Drehpunkt des Eilgangzylinders.

Fig 1

Die Erfindung betrifft eine Spritzgieszmaschine zur Kunststoffverarbeitung, bestehend aus einer Spritzeinheit, einer festen und einer auf einer Fuehrungsbahn eines Grundrahmens auf Gleitschuhen beweglichen Werkzeugaufspannplatte, deren Verschiebebewegung durch langhubige hydraulische Eilgangzylinder erfolgt. Die beiden Werkzeugaufspannplatten sind durch in einer Werkzeugaufspannplatte freitragend gelagerte Saeulen bei geschlossenem Formwerkzeug miteinander verriegelbar, wobei zur Schlieszkrafterzeugung kurzhubige hydraulische Schlieszzylinder dienen. Zur Einstellung der Werkzeugeinbauhoehe ist eine Werkzeughoehenverstellvorrichtung vorhanden, die mit den Saeulen verbunden ist.

Gattungsgemaesze Schlieszeinheiten mit freitragend in einer Werkzeugaufspannplatte gelagerten Saeulen sind auf dem DD WP 122.667, dem DD WP 146.406 und der US PS 3465.387 bekannt. Unterhalb der Werkzeugaufspannplatte und parallel zur Bewegungsrichtung der beweglichen Werkzeugaufspannplatte sind die Eilgangzylinder angeordnet, wobei sie sich in der DD PS 122.667 und der US PS zwischen dem Untersatz und der beweglichen Platte oder wie im DD WP 145.406 zwischen den beiden Werkzeugaufspannplatten befinden. Beide Loesungen haben den Vorteil, dasz die Zugaenglichkeit zum Werkzeugraum nicht eingeschraenkt wird, wodurch die Vorteile der freitragenden Saeulen hinsichtlich des Werkzeugwechsels und der Entnahme der Spritzguszteile wirksam werden.

Von Nachteil bei diesen Loesungen ist jedoch, dasz der unterhalb des Massenschwerpunktes der beweglichen Werkzeugaufspannplatte liegende Kraftangriffspunkt beim Beschleunigen und Bremsen ein Kippmoment hervorruft, das zu einer Neigung der beweglichen Aufspannplatte fuehrt. Um diese Neigung moeglichst gering zu halten sind extrem steife und masseintensive Fuehrungselemente zwischen der beweglichen Werkzeugaufspannplatte und dem Maschinenbett erforderlich. Von Nachteil ist ferner der erhoehte Verschleisz der Gleit- und Rollelemente unter der beweglichen Werkzeugaufspannplatte, die durch die zu verhindernde Kippbewegung extrem belastet werden.

Bekannt sind auch Schlieszeinheiten, an denen der oder die Eilgangszylinder hinter der beweglichen Werkzeugaufspannplatte etwa im Massenschwerpunkt bzw. symmetrisch zu diesem, angeordnet sind (Kunststoffe Heft 6 von 1977 S. 329 und DE AS 1136.799). Mit einer derartigen Loesung werden zwar die zuvor beschriebenen Nachteile vermieden, jedoch sind durch diese Anordnung zusaetzliche Abstuetzvorrichtungen fuer den oder die Eilgangzylinder erforderlich, und es wird eine groeszere Aufstellflaeche fuer die Schlieszeinheit der Spritzgieszmaschine benoetigt.

In einer aelteren Anmeldung (WP B29C/322.120.6) wurde ein Eilgangantrieb vorgeschlagen, mit dem die bislang bekannten Nachteile beseitigt werden sollen. Die Loesung sieht vor, dasz ein kurzhubiger Eilgangzylinder, der um einen festen Drehpunkt am Grundrahmen schwenkbar gelagert ist ueber seine Kolbenstange mit einer Koppel verbunden ist. Die Koppel ist wiederum ueber ein Drehgelenk mit dem Endrahmen verbunden. Der Vorteil dieser Loesung besteht darin, dasz die Kraefte fuer den Eilgangantrieb in der Naehe der horizontalen Schwerachse der beweglichen Werkzeugaufspannplatte eingeleitet werden, ohne dasz sich die Baulaenge der Schlieszeinheit vergroeszert. Der Nachteil dieser Loesung besteht jedoch in dem relativ hohen technisch-oekonomischen Aufwand fuer diesen Eilgangantrieb.

Ziel der Erfindung ist die Senkung des technisch-oekonomischen Aufwandes fuer die Verschiebebewegung der beweglichen Werkzeugaufspannplatte, die Reduzierung des auftretenden Verschleiszes und die Gewaehrleistung einer hohen Funktionssicherheit.

Aufgabe der Erfindung ist es, einen kostenguenstigen Eilgangantrieb fuer die bewegliche Werkzeugaufspannplatte bei Spritzgieszmaschinen zu entwickeln, der die Zugaenglichkeit zum Werkzeugraum nicht behindert, der eine guenstige Kraftuebertragung auf die bewegliche Werkzeugaufspannplatte gewaehrleistet und die Baulaenge fuer die Schlieszeinheit nicht vergroeszert.

Erfindungsgemaesz wird die Aufgabe dadurch geloest, dasz zwischen der beweglichen Werkzeugaufspannplatte und der Spritzeinheit mindestens ein Eilgangzylinder so angeordnet ist, dasz dessen Laengsachse um einen spitzen Winkel genueber der horizontalen Fuehrungsbahn geneigt ist. Am ausfahrseitigen Ende fuer die Kolbenstange ist der Eilgangzylinder um einen Drehpunkt schwenkbar im Grundrahmen der Spritzgieszmaschine gelagert. Das Ende der Kolbenstange ist in einem Drehpunkt gelenkig mit den Gleitschuhen der beweglichen Werkzeugaufspannplatte verbunden. Dabei ist der senkrechte Abstand vom Massenschwerpunkt der beweglichen Werkzeugaufspannplatte mit Formwerkzeughaelfte zum Drehpunkt im Gleitschuh kleiner als zum Drehpunkt des Eilgangzylinders.

In der weiteren Ausgestaltung der Erfindung ist es vorteilhaft, wenn der spitze Winkel im eingefahrenen Zustand der Kolbenstange maximal 30° und im ausgefahrenen Zustand minimal 2° betraegt.

Ferner ist es guenstig, das Ende der Kolbenstange im Drehpunkt gelenkig mit in den Gleitschuhen der beweglichen Werkzeugaufspannplatte verschiebbaren Fuehrungsstangen zu verbinden und den Kettenantrieb fuer die Werkzeughoehenverstellvorrichtung mit dem Antrieb zum Verschieben der Fuehrungsstange zu koppeln. Die Vorteile dieser Loesung bestehen darin, dasz der technisch-oekonomische Aufwand fuer den Eilgangantrieb gering ist. Durch die schraege und schwenkbare Anordnung des bzw. der Eilgangzylinder im Grundrahmen der Spritzgieszmaschine ist einerseits die uneingeschraenkte Zugaenglichkeit zum Werkzeugraum gewaehrleistet. Andererseits wird durch die schraege Krafteinleitung in die bewegliche Werkzeugaufspannplatte eine Kraftkomponente erzeugt, die dem auftretenden Kippmoment beim Beschleunigen und Abbremsen der beweglichen Werkzeugaufspannplatte entgegen wirkt, was zu einer Senkung des Verschleiszes und zu einer groeszeren Funktionssicherheit fuehrt.

Nachstehend wird die Erfindung in einem Ausfuehrungsbeispiel naeher erlaeutert. In den zugehoerigen Figuren ist dargestellt:

Fig. 1: Spritzgieszmaschine mit eingefahrener Kolbenstange des Eilgangzylinders und hinter derfesten Werkzeugaufspannplatte angeordneter Spritzeinheit.

Fig. 2: Spritzgieszmaschine gemaesz Fig. 1 mit ausgefahrener Kolbenstange des Eilgangzylinders.

Fig. 3: Spritzgieszmaschine gemaesz Fig. 2, bei der der Kettentrieb fuer die Werkzeughoehenverstellvorrichtung mit dem Eilgangantrieb gekoppelt ist.

Fig. 4: Spritzgieszmaschine mit eingefahrenem Eilgangzylinder und hinter der beweglichen Werkzeugaufspannplatte angeordneter Spritzeinheit.

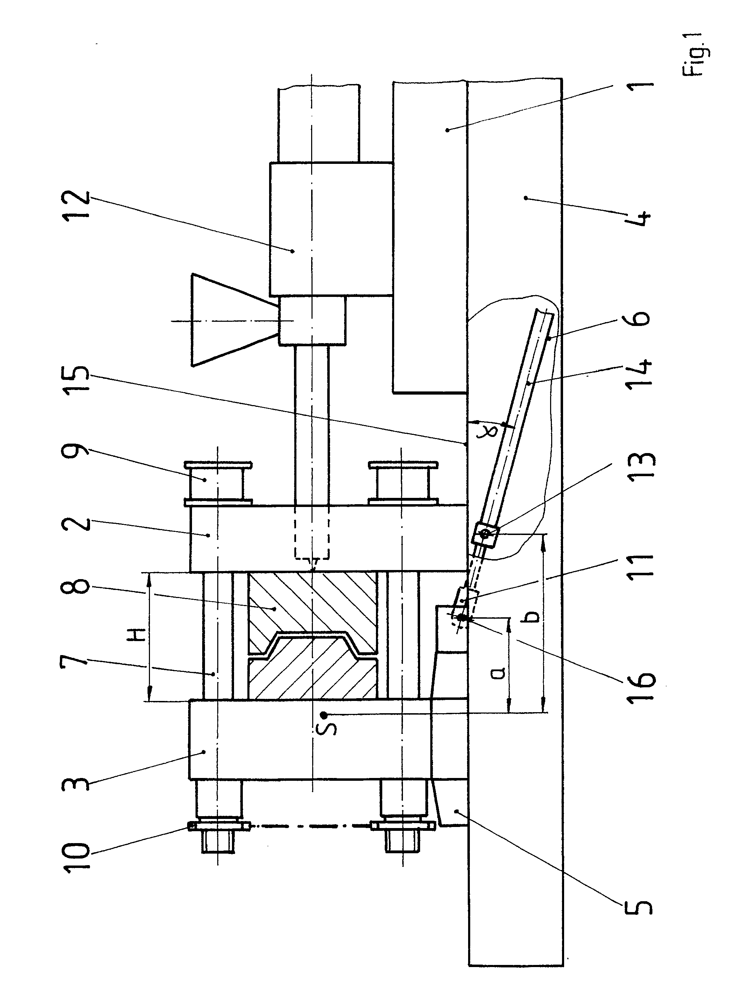

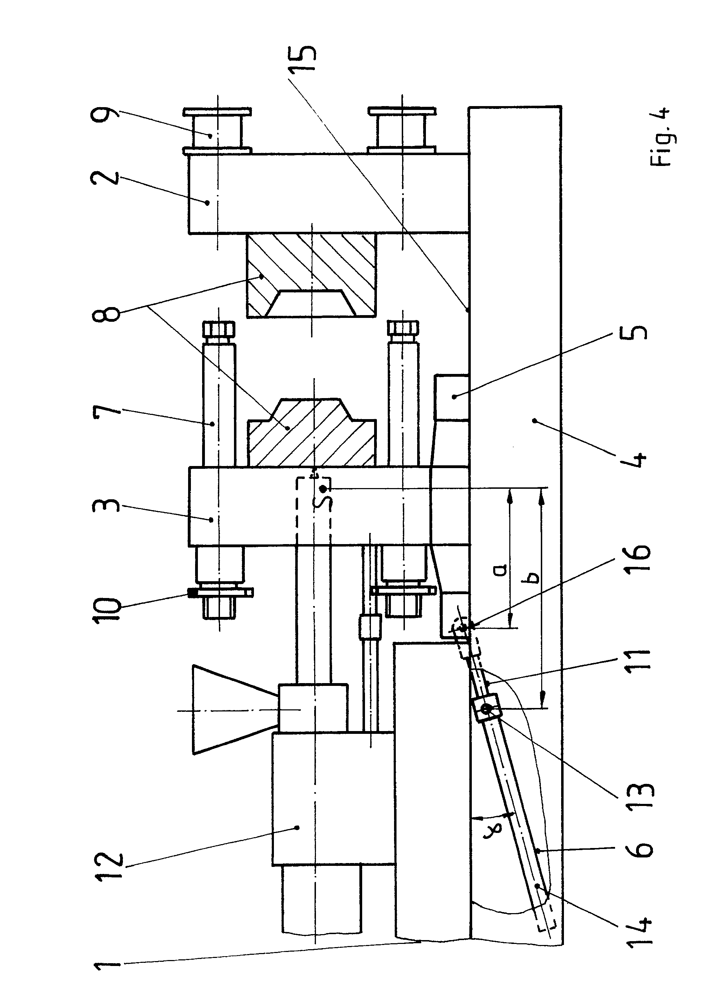

Die in den Figuren 1 bis 4 vereinfacht dargestellte Spritzgieszmaschine 1 besteht aus einem Grundrahmen 4, auf dem eine feste Werkzeugaufspannplatte 2 und eine durch Eilgangzylinder 6 auf Gleitschuhen 5 bewegliche Werkzeugaufspannplatte 3, mit dazwischen befindlichen Formwerkzeug 8, angeordnet sind. In den Figuren 1, 2 und 3 ist rechts neben der festen Werkzeugaufspannplatte 2 die Spritzeinheit 12 angeordnet, waehrend sich in Figur 4 die Spritzeinheit 12 links neben der beweglichen Werkzeugaufspannplatte 3 befindet. In Abhaengigkeit vom Standort der Spritzeinheit 12, ergeben sich daraus fuer die Anordnung der Eilgangzylinder 6 unterschiedliche Ausfuehrungsformen, die aus den Figuren 1 und 4 ersichtlich sind. Die beiden Werkzeugaufspannplatten 2 und 3 werden im zusammengefahrenen Zustand mit den beiden Haelften des Formwerkzeuges 8, ueber die in einer der Werkzeugaufspannplatten freitragend gelagerten Saeulen 7 miteinander verriegelt. Ueber die Schlieszzylinder 9 wird die Schlieszkraft aufgebracht, wodurch waehrend des Einspritzvorganges ein Auftreiben der beiden Haelften des Formwerkzeuges verhindert wird. Am anderen Ende der Saeulen 7 befindet sich zur Einstellung dar Werkzeugeinbauhoehe H eine Werkzeughoehenverstellvorrichtung, die ueber einen Kettentrieb 10 betaetigt wird. In allen dargestellten Figuren ist der Eilgangzylinder 6 um einen horizontalen Drehpunkt 13 im Grundrahmen 4 der Spritzgieszmaschine 1 schwenkbar gelagert. In seiner Laengsachse 14 ist der Eilgangzylinder 6 gegenueber der horizontalen Fuehrungsbahn 15 des Grundrahmens 4 um einen Winkel $\alpha$, der sich waehrend der Eilgangbewegung beim Auf- und Zufahren des Formwerkzeuges 8 veraendert, geneigt.

Gemaesz der Erfindung musz der Drehpunkt 13 fuer den Eilgangzylinder 6 zwischen der beweglichen Werkzeugaufspannplatte 3 und der Spritzeinheit 12 innerhalb des Grundrahmens 4 angeordnet sein. Das Ende der Kolbenstange 11 hingegen ist in dem Drehpunkt 16 gelenkig mit den Gleitschuhen 5 der beweglichen Werkzeugaufspannplatte 3 verbunden. Ferner musz der senkrechte Abstand a vom Massenschwerpunkt S der beweglichen Werkzeugaufspannplatte 3 mit der Formwerkzeughaelfte 8, den Saeulen 7 und den Gleitschuhen 5 zum Drehpunkt 16 im Gleitschuh 5 kleiner als der Abstand b zum Drehpunkt 13 des Eilgangzylinders 6 sein. Die in Figur 1 gezeichneten Stellung des Eilgangzylinders 6 trifft sowohl fuer die Schlieszbewegung in der Abbremsphase als auch fuer die Auffahrbewegung in der Beschleunigungsphase der beweglichen Werkzeugaufspannplatte 3 zu. Dem in der Abbremsphase als auch in der Beschleunigungsphase der beweglichen Werkzeugaufspannplatte 3 auftretenden Kippmoment, das durch den unterhalb des Massenschwerpunktes S im Drehgelenk 16 liegenden Kraftangriffspunkt verursacht wird, wird nunmehr durch die schraege Anordnug des Eilgangzylinders entgegengewirkt. Beim Abbremsen und Beschleunigen der Eilgangbewegung waehrend des Schliesz- und Oeffnungsvorganges wirkt neben der horizontalen Kraftkomponente entlang der Fuehrungsbahn 15 eine vertikale Kraftkomponente, die die Lagerflaeche des Gleitschuhes 5 auf der Fuehrungsbahn 15 des Grundrahmens 4 entlastet. Dadurch tritt eine teilweise Kompensierung der wirkenden Aktions- und Reaktionskraefte, sowie der sich daraus ergebenden Momente ein, die im Ergebnis zu einer Reduzierung der Verschleiszbeanspruchung fuehren.

Die Lage des festen Drehpunktes 16 fuer die Kolbenstange 11 im Gleitschuh ist abhaengig von der Anordnung der Spritzeinheit. Befindet sich die Spritzeinheit 12 hinter der festen Werkzeugaufspannplatte 2, so ist der Drehpunkt 13 fuer die Lagerung des Eilgangzylinders 6 im Bereich des Grundrahmens 4 unterhalb der festen Werkzeugaufspannplatte 2 (Fig. 1, 2 und 3) angeordnet. Ist hingegen die Spritzeinheit 12 hinter der beweglichen Werkzeugaufspannplatte 3 (Fig. 4) angeordnet, so befindet sich der Drehpunkt 13 im Bereich des Grundrahmens 4 unterhalb der Spritzeinheit12. Auch in diesem Falle ist der senkrechte Abstand a vom Massenschwerpunkt S der beweglichen Werkzeugaufspannplatte 3 zum Drehpunkt 16 im Gleitschuh 5 kleiner als der senkrechte Abstand b zum Drehpunkt 13 des Eilgangzylinders 6.

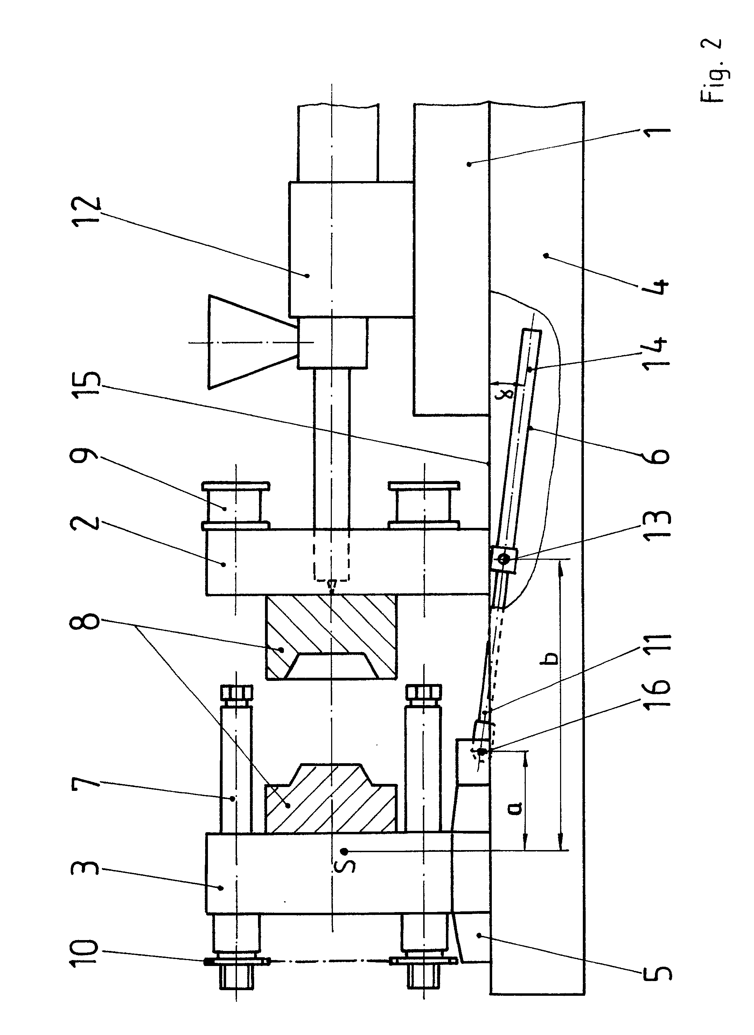

In Figur 2 ist im Unterschied zur Figur 1 die Kolbenstange 11 des Eilgangzylinders 11 ausgefahren und die bewegliche Werkzeugaufspannplatte 3 befindet sich in ihrer Endstellung. Deutlich erkennbar ist, dasz sich in dieser Stellung der Neigungswinkel α verkleinert hat.

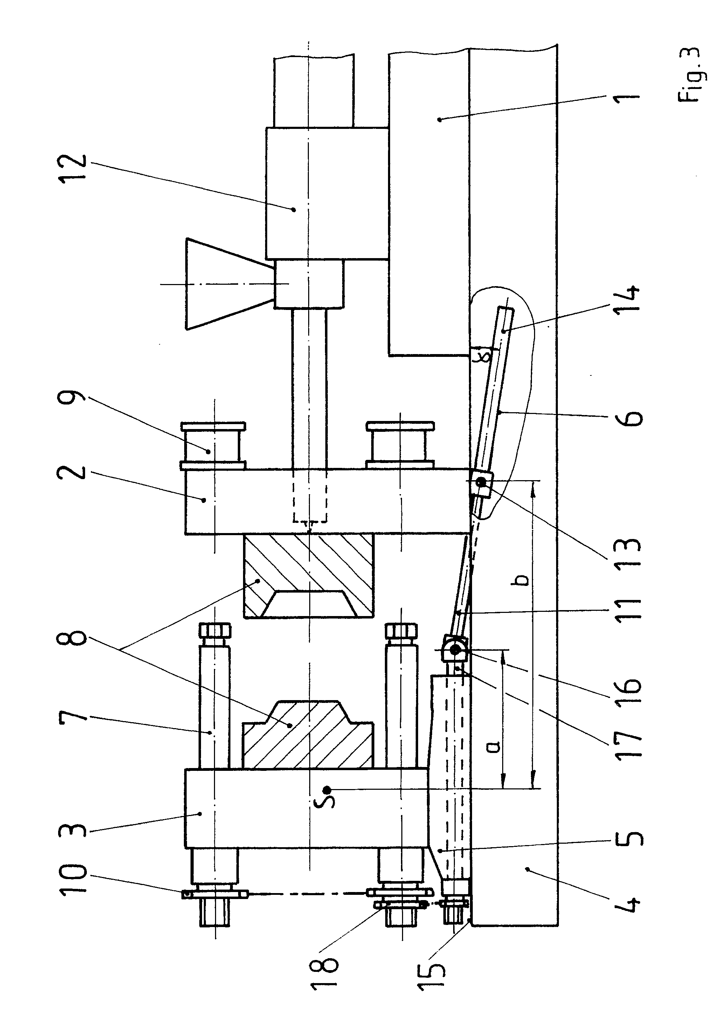

In Figur 3 ist der Drehpunkt 16 zwischen der Kolbenstange 11 und dem Gleitschuh 5 durch eine im Gleitschuh 5 verschiebbar angeordnete Fuehrungsstange 17 laengsverschiebbar gelagert. Ferner ist der Kettentrieb 10 fuer die Werkzeughoehenverstellvorrichtung mit dem Antrieb 18 fuer die Fuehrungsstange 17 gekoppelt. Diese Anordnung hat den Vorteil, dasz sich durch Verlagerung des Massenschwerpunktes S (z.B. groeszere Werkzeughoehe H bedeutet laenger herausragende Saeulen 7) auch der Kraftangriffspunkt im Drehpunkt 16 verschiebt. Das hat zur Folge, dasz durch das groeszer werdende Kippmoment der beweglichen Werkzeugaufspannplatte 3 mit Formwerkzeughaelfte 8, durch die gleichzeitige Verlaengerung der Hebelarme a und b zur Krafteinleitung fuer die Eilgangbewegung ein groeszeres Gegenmoment erzeugt wird.

Aufstellung der verwendeten Bezugszeichen
‒ ‒ ‒ ‒ ‒ ‒ ‒ ‒ ‒ ‒ ‒ ‒ ‒ ‒ ‒ ‒ ‒ ‒ ‒ ‒ ‒

1 - Spritzgieszmaschine
2 - Werkzeugaufspannplatte (fest)
3 - Werkzeugaufspannplatte (beweglich)
4 - Grundrahmen
5 - Gleitschuh
6 - Eilgangzyliner
7 - Saeulen
8 - Formwerkzeug
9 - Schlieszzylinder
10 - Kettentrieb fuer Werkzeughoehenverstellvorrichtung
11 - Kolbenstange
12 - Spritzeinheit
13 - Drehpunkt
14 - Laengsachse
15 - Fuehrungsbahn
16 - Drehpunkt
17 - Fuehrungsstange
18 - Antrieb fuer Fuehrungsstange
H - Werkzeughoehe
α - Neigungswinkel

**Patentansprüche**

1. Spritzgieszmaschine zur Kunststoffverarbeitung, bestehend aus einer Spritzeinheit, einer festen und einer auf einer Fuehrungsbahn eines Grundrahmens auf Gleitschuhen beweglichen Werkzeugaufspannplatte, deren Verschiebebewegung durch langhubige hydraulische Eilgangzylinder erfolgt die beiden Werkzeugaufspannplatten durch in einer Werkzeugaufspannplatte freitragend gelagerte Saeulen bei geschlossenem Formwerkzeug miteinander verriegelbar sind, zur Schlieszkrafterzeugung kurzhubige hydraulische Schlieszzylinder dienen und zur Einstellung der Werkzeugeinbauhoehe eine Werkzeughoehenverstellvorrichtung vorhanden ist, die mit den Saeulen verbunden ist, dadurch gekennzeichnet, dasz
   - zwischen der beweglichen Werkzeugaufspannplatte (3) und der Spritzeinheit (12) mindestens ein Eilgangzylinder (6) so angeordnet ist, dasz dessen Laengsachse (14) um einen spitzen Winkel (α) gegenueber der horizontalen Fuehrungsbahn (15) geneigt ist, der Eilgangzylinder (6) am ausfahrseitigen Ende fuer die Kolbenstange (11) um einen Drehpunkt (13) schwenkbar im Grundrahmen (4) der Spritzgieszmaschine (1) gelagert ist,
   - das Ende der Kolbenstange (11) in einem Drehpunkt (16) gelenkig mit den Gleitschuhen (5) der beweglichen Werkzeugaufspannplatte (3) verbunden ist und der senkrechte Abstand (a) vom Massenschwerpunkt (S) der beweglichen Werkzeugaufspannplatte (3) mit Formwerkzeughaelfte (8) zum Drehpunkt (16) im Gleitschuh (5) kleiner ist als der Abstand (b) zum Drehpunkt (13) des Eilgangzylinders (6).

2. Spritzgieszmaschine nach Anspruch 1, dadurch gekennzeichnet, dasz das Ende der Kolbenstange (11) im Drehpunkt (16) gelenkig mit in den Gleitschuhen (5) der beweglichen Werkzeugaufspannplatte (3) verschiebbaren Fuehrungsstangen (17) verbunden ist und der Kettentrieb (10) fuer die Werkzeughoehenverstellvorrichtung mit dem Antrieb (18) zum Verschieben der Fuehrungsstange (17) gekoppelt ist.

3. Spritzgieszmaschine nach Anspruch 1 und 2, dadurch gekennzeichnet, dasz der spitze Winkel (α) im eingefahrenen Zustand der Kolbenstange (11) maximal 30° und im ausgefahrenen Zustand minimal 2° betraegt.

Fig.1

Fig. 2

EP 0 442 364 A2

Fig. 3

EP 0 442 364 A2

Fig. 4